(19) Europäisches Patentamt
European Patent Office
Office européen des brevets

(11) **EP 2 382 118 B1**

(12) **EUROPÄISCHE PATENTSCHRIFT**

(45) Veröffentlichungstag und Bekanntmachung des Hinweises auf die Patenterteilung:
**27.03.2013 Patentblatt 2013/13**

(21) Anmeldenummer: **10702415.0**

(22) Anmeldetag: **18.01.2010**

(51) Int Cl.:
*B60W 40/06* (2012.01)     *G01C 21/28* (2006.01)
*G06K 9/00* (2006.01)     *G06K 9/46* (2006.01)
*G06T 7/00* (2006.01)     *B60G 17/0165* (2006.01)
*B60W 40/072* (2012.01)     *B60W 40/076* (2012.01)

(86) Internationale Anmeldenummer:
**PCT/EP2010/000249**

(87) Internationale Veröffentlichungsnummer:
**WO 2010/083971 (29.07.2010 Gazette 2010/30)**

(54) **VERFAHREN ZUR ERMITTLUNG EINES EINEM FAHRZEUG VORAUSLIEGENDEN STRASSENPROFILS EINER FAHRSPUR**

METHOD FOR DETERMINING A ROAD PROFILE OF A LANE LOCATED IN FRONT OF A VEHICLE

PROCÉDÉ DE DÉTERMINATION D'UN PROFIL D'UNE VOIE PRÉCÉDANT UN VÉHICULE SUR UNE ROUTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.01.2009 DE 102009006000**
**14.07.2009 DE 102009033219**

(43) Veröffentlichungstag der Anmeldung:
**02.11.2011 Patentblatt 2011/44**

(73) Patentinhaber: **Daimler AG**
**70327 Stuttgart (DE)**

(72) Erfinder: **SCHWARZ, Tilo**
**89275 Elchingen (DE)**

(74) Vertreter: **JENSEN & SON**
**366-368 Old Street**
**London**
**EC1V 9LT (GB)**

(56) Entgegenhaltungen:
EP-A1- 1 193 661     DE-A1- 10 127 034
DE-A1-102005 038 314     GB-A- 2 151 872
US-A1- 2002 087 253     US-B1- 6 963 657

**Beschreibung**

Die Erfindung betrifft ein Verfahren und eine Vorrichtung zur Ermittlung eines einem Fahrzeug vorausliegenden Straßenprofils einer Fahrspur anhand von erfassten Bilddaten und/oder erfassten Fahrzeugeigenbewegungsdaten, wobei eine Schätzvorrichtung vorgesehen ist, der die erfassten Bilddaten und/oder die erfassten Fahrzeugeigenbewegungsdaten zugeführt werden.

Aus der DE 197 49 086 C1 ist eine Vorrichtung und ein Verfahren zur Ermittlung von für einen Verlauf einer Fahrspur indikativen Daten, die eine Fahrspurerkennungssensorik, eine Objektpositionssensorik, die wenigstens einen Abstand eines vor einem Fahrzeug befindlichen Objektes und dessen Richtungswinkel bezüglich einer Fahrzeugbewegungsrichtung erfasst und eine Fahrzeugeigenbewegungssensorik beinhaltet bekannt. Dabei ist eine Schätzvorrichtung vorgesehen, der Fahrspurerkennungsmessdaten, Objektpositionsmessdaten und Fahrzeugeigenbewegungsmessdaten zugeführt werden und die in Abhängigkeit davon eine Fahrspurkrümmung und/oder eine Querposition eines jeweiligen Objektes vor dem Fahrzeug relativ zur Fahrspur durch Schätzung mittels eines vorgebbaren, ein dynamisches Fahrzeugbewegungsmodell beinhaltenden Schätzalgorithmus ermittelt. Die Schätzvorrichtung umfasst hierzu einen Kalman-Filter. Insbesondere werden das Verfahren und die Vorrichtung in Straßenfahrzeugen verwendet.

Darüber hinaus sind aus der US 2002/0087253 A1, EP 1 193 661 A1, US 6,963,657 B1 und der DE 101 27 034 A1 weitere Verfahren zur Ermittlung von vorausliegenden Straßenverläufen, insbesondere Kurvenverläufen und Fahrbahnneigungen, bekannt.

Der näschstliegende Stand der Technik ist in der US2002 087253 A1 zu sehen.

Der Erfindung liegt die Aufgabe zugrunde, ein Verfahren anzugeben, anhand dessen ein Straßenhöhenprofil einer einem Fahrzeug vorausliegenden Fahrspur ermittelt wird.

Die Aufgabe wird erfindungsgemäß hinsichtlich des Verfahrens durch die im Anspruch 1 und hinsichtlich der Vorrichtung durch die im Anspruch 4 angegebenen Merkmale gelöst. Vorteilhafte Weiterbildungen sind Gegenstand der Unteransprüche.

Das erfindungsgemäße Verfahren sieht vor, dass ein einem Fahrzeug vorausliegendes Straßenprofil einer Fahrspur anhand von erfassten Bilddaten und/oder erfassten Fahrzeugeigenbewegungsdaten ermittelt wird, wobei die Bilddaten und/oder die Fahrzeugeigenbewegungsdaten einer Schätzvorrichtung zugeführt werden. Erfindungsgemäß wird anhand der erfassten Bilddaten sowie der erfassten Fahrzeugeigenbewegungsdaten ein Straßenhöhenprofil der dem Fahrzeug vorausliegenden Fahrspur ermittelt.

Mit Hilfe einer durch die Schätzvorrichtung geschätzten Fahrzeugeigenbewegung wird das aus Messungen geschätzte Straßenhöhenprofil sukzessive zu einem durchgängigen, von der Fahrzeugeigenbewegung unabhängigen Straßenhöhenprofil zusammengesetzt. Das Straßenhöhenprofil wird dabei beispeilsweise in einem Welt-Koordinatensystem oder sogenannten Inertial-Koordinatensystem zusammengesetzt. Dadurch wird ein kontinuierliches Straßenhöhenprofil überfahrener Radspuren ermittelt. Die Fahrzeugeigenbewegung kann hierbei sowohl auf einer Schätzung aus Bilddaten als auch auf einer Schätzung aus Fahrzeugdaten beruhen.

Dabei wird eine Messung von Straßenhöhendaten als ein in regelmäßigen zeitlichen Abständen durchgeführter Messprozess bezeichnet, wobei das Straßenhöhenprofil vorteilhaft unter Einbeziehung der Fahrzeugeigenbewegungsdaten ermittelt wird.

Alternativ dazu kann das Straßenhöhenprofil auch ohne eine direkte Messung von Fahrzeugeigenbewegungsdaten anhand einer Schätzung der Fahrzeugeigenbewegung mittels wenigstens eines Kamerabildes über der Zeit ermittelt werden

Insbesondere wird das Straßenhöhenprofil vor dem Fahrzeug vermessen und zeitlich so integriert, dass beispielsweise zu erwartende Bodenunebenheiten an jeweiligen Radpositionen des Fahrzeuges bekannt sind, wenn das Fahrzeug einen zuvor vermessenen Bereich überfährt. Das Straßenhöhenprofil wird somit zeitlich derart integriert, dass vorhandene Bodenunebenheiten an den jeweiligen Radpositionen des Fahrzeuges bestimmbar sind, bevor diese vom Fahrzeug überfahren werden.

Als Fahrzeugeigenbewegungsdaten werden beispielsweise eine Fahrgeschwindigkeit, eine Gierrate und/oder Raddrehzahlen erfasst, die von am Fahrzeug angeordneten Erfassungseinheiten ermittelt werden bzw. ermittelt wird.

Besonders vorteilhaft wird in Abhängigkeit des ermittelten Straßenhöhenprofils (P) der vorausliegenden Fahrspur zumindest eine Fahrwerksfunktion, Fahrwerksteuerung und/oder Fahrwerksregelung des Fahrzeuges gesteuert und/oder geregelt. In diesem Zusammenhang kann es sich um beliebige Fahrwerksysteme oder Komponenten von Fahrwerksystemen handeln, beispielsweise eine Fahrzeugniveauregulierung, aktive Roll-Stabilisierung, Verstelldämpfung, Verstellfedern und Lenkungen.

Das nach dem erfindungsgemäßen Verfahren ermittelte Straßenhöhenprofil kann insbesondere verschiedenen Fahrzeugfunktionen zugrunde gelegt werden. Zu den Fahrzeugfunktionen zählen beispielsweise eine vorausschauende aktive Fahrwerksregelung, eine Verstelldämpfung, eine Wankstabilisierung und/oder eine Voreinstellung eines Antriebsstranges bei vorauszusehender Berg- oder Talfahrt. Gleichsam eignet sich das erfindungsgemäße Verfahren beispielsweise im Zusammenhang mit einer automatischen Lichtsteuerung.

Ausführungsbeispiele der Erfindung werden anhand von Zeichnung näher erläutert.

Dabei zeigen:

Fig. 1 schematisch ein Blockschaltbild einer Durchführung des erfindungsgemäßen Verfahrens, und

Fig. 2 schematisch einen Ablauf von Verfahrensschritten des erfindungsgemäßen Verfahrens.

Einander entsprechende Teile sind in der Figur mit den gleichen Bezugszeichen versehen.

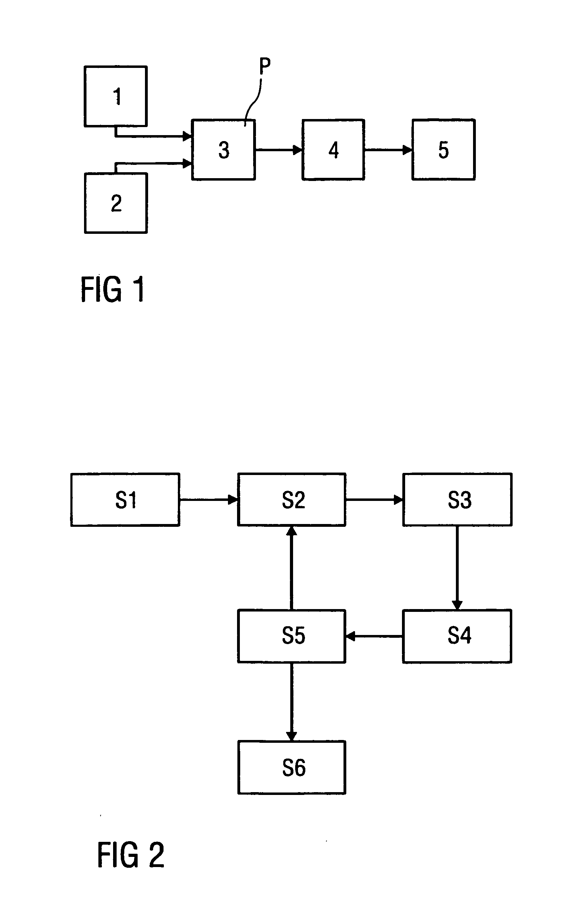

In Figur 1 ist ein Blockschaltbild einer Durchführung des erfindungsgemäßen Verfahrens dargestellt.

Eine Vorrichtung zur Durchführung des erfindungsgemäßen Verfahrens umfasst wenigstens eine Bildaufnahmeeinheit, vorzugsweise zwei Bildaufnahmeeinheiten, in Form einer Kamera, die beispielsweise in einem Frontbereich eines Fahrzeuges fest angeordnet ist bzw. sind.

Die wenigstens eine Bildaufnahmeeinheit erfasst in einem vorgegebenen zeitlichen Abstand, beispielsweise im Millisekundenbereich, Bilddaten 1 einer Fahrspur, die dem Fahrzeug vorausliegt. Die Bilddaten 1 sind insbesondere zumindest aufgrund inhärenter Rauschprozesse einer Kamera, wie beispielsweise thermisches Rauschen und/oder Wandlerrauschen, Rausch behaftet.

Dabei bezeichnet der Begriff Rauschen eine Verschlechterung von digital und/oder elektronisch aufgenommenen Bilddaten 1 durch Störungen. Die Störungen äußern sich insbesondere in Pixeln, die sich beispielsweise in einer Farbe und/oder einer Helligkeit von den rauschfreien eigentlichen Bilddaten 1 einer Bildaufnahme unterscheiden.

Die aufgenommenen Bilddaten 1 werden einer Schätzvorrichtung 3, beispielsweise einem Kalman-Filter, zugeführt, wobei der Kalman-Filter ein stochastischer Zustandsschätzer dynamischer Systeme ist.

Innerhalb eines Zeitintervalls bewegt sich das Fahrzeug entsprechend der Fahrzeugeigenbewegung fort.

Nach einer jeden Bildaufnahme wird aus den im letzten Zyklus erfassten Bilddaten 1 sowie beispielsweise über am Fahrzeug angeordnete Erfassungseinheiten ermittelte Fahrzeugeigenbewegungsdaten 2 anhand der Schätzvorrichtung 3 ein optimales Straßenhöhenprofil P ermittelt, insbesondere geschätzt.

Die erfassten Fahrzeugeigenbewegungsdaten 2 werden der Schätzvorrichtung 3 insbesondere über ein im Fahrzeug angeordnetes Bussystem, beispielsweise ein CAN-Bus, zugeführt.

Dabei werden als Fahrzeugeigenbewegungsdaten 2 beispielsweise eine Fahrgeschwindigkeit, eine Gierrate, Lenkwinkel, Lenkwinkelgeschwindigkeit und/oder Raddrehzahlen des Fahrzeuges erfasst.

Sind an dem Fahrzeug zwei Bildaufnahmeeinheiten angeordnet, kann für eine Ermittlung des Straßenhöhenprofils P anhand der Bilddaten 1, die in dem Zeitintervall aufgenommen wurden, beispielsweise eine Verschiebung eines gleichen Weltpunktes in Pixeln verschiedener zeitgleich erfasster Bildaufnahmen der Bildaufnahmeeinheiten dienen, was als Disparität bezeichnet wird.

In einer möglichen Ausführungsform kann auch eine Verschiebung eines gleichen Weltpunktes in Pixeln zeitlich verschieden erfasster Bildaufnahmen einer Bildaufnahmeeinheit zur Ermittlung des Straßenhöhenprofils P genutzt werden.

Formal gesehen handelt es sich bei dem erfindungsgemäßen Verfahren um einen stochastischen Messprozess, da von der wenigstens einen Bildaufnahmeeinheit erfasste Bilddaten 1 unterschiedlichen Rauscheinflüssen, wie z. B. einem thermischen Rauschen und/oder einem statischen Rauschen unterliegen.

Das Fahrzeug wiederum bewegt sich entsprechend einer physikalischen Bewegungsgleichung, wodurch zusätzlich unbekannte Stör-, Eingangs- und/oder Rauschterme erzeugt werden. Dabei ist ein Systemanteil, d. h. das Fahrzeug und eine Umwelt, insbesondere eine Straße, zeitkontinuierlich und eine Datenerfassung zeitdiskret.

Einen erheblichen Einfluss auf eine Messsystemausführung hat eine optimale Wahl einer Repräsentation einer Schätzgröße im Zustandsvektor eines Messsystems, beispielsweise bei der Bildverarbeitung. Hierzu eignet sich im Besonderen eine nicht nahe liegende Repräsentation des Straßenhöhenprofils P in einem Disparitätsraum, mit den Koordinaten: Bildspalte, Bildzeile, Disparität.

Folge hiervon ist eine mögliche Parametrisierung des Messsystems, beispielsweise der Bildverarbeitung.

Es ergibt sich folgende Formalisierung:

Zeitkontinuierliche Entwicklung des Messsystems:

$$x'(t) = f(x(t), v(t), t) \qquad\qquad [1]$$

mit x' = erste Ableitung von x nach der Zeit, x = Systemzustand, v = Systemrauschen und t = Zeit.

Der Systemzustand x (t) enthält alle Fahrzeug bezogenen Größen sowie Parameter des Straßenhöhenprofils P.

Messprozess:

$$y_n = h_n(x_n, w_n, t_n) \qquad\qquad [2]$$

mit y= Messungen, h = Messfunktion, die den Systemzustand in Messungen umwandelt bzw. die Messungen beschreibt, x = Systemzustand, w = Messrauschen, t = Zeit, n = Zeitschritt.

Ein solcher Messprozess lässt sich beispielsweise mittels eines Prediktor-Korrektor-Verfahrens verfolgen. Um Rechenzeit und/oder Speicher zu sparen kann der Systemzustand auch in mehrere Teilsystemzustände separiert werden, z.B. Fahrzeugeigenbewegung und Profildaten, welche sodann separat geschätzt werden. Um die Genauigkeit zu erhöhen, kann der Korrekturschritt mehrfach durchlaufen werden

Durch eine Parametrisierung eines Messverfahrens, beispielsweise der Bildverarbeitung, kann das Straßenhöhenprofil P in vorteilhafter Weise z. B. auch bei Kurvenfahrten sowie bei Bilddaten 1, die in einem Stereoverfahren aufgenommen wurden, ermittelt werden. Dabei wird die Unsicherheit des Straßenhöhenprofils P in Ort und/oder Zeit mit Hilfe der Schätzvorrichtung 3 geschätzt, wobei Messalgorithmen, z. B. die Bildverarbeitung, anhand der geschätzten Unsicherheiten parametrisiert werden können. Dadurch wird besonders vorteilhaft eine Rechenzeit vermindert sowie eine Messgenauigkeit erhöht.

Da zu jedem Zeitschritt alle Kovarianzen der Parameter geschätzt werden, können Suchbereiche im Bild- und/oder Disparitätsraum für diesen Zeitabschnitt auch unter Berücksichtigung einer momentanen statistischen Unsicherheit exakt bestimmt werden.

Das ermittelte Straßenhöhenprofil P wird vorzugsweise einer Steuereinheit 4 zugeführt, die beispielsweise anhand hinterlegter Kennfelder Fahrzeugfunktionen 5, wie z. B. eine vorausschauende aktive Fahrwerksregelung zur Komfortverbesserung, eine Verstelldämpfung, eine Wankstabilisierung und/oder eine Voreinstellung eines Antriebsstranges bei vorauszusehender Berg- oder Talfahrt, steuert und/oder regelt.

Das Straßenhöhenprofil P wird vor dem Fahrzeug derart vermessen und zeitlich so integriert, dass die zu erwartenden Bodenunebenheiten besonders vorteilhaft an einem jeweiligen Fahrzeugrad des Fahrzeuges bekannt sind, wenn das Fahrzeug den vermessenen Bereich überfährt. Hierzu werden alle statistischen Unsicherheiten zwischen allen Variablen des Systems über die Zeit geschätzt, wobei das Messsystem anhand der geschätzten Unsicherheiten vor jeder Messung parametrisiert wird. Auf diese Weise lässt sich beispielsweise ein Fahrwerk des Fahrzeuges so regeln, dass z. B. Aufbaubewegungen, die sonst aufgrund der der Bodenunebenheiten auftreten, in vorteilhafter Weise vermieden werden.

Figur 2 zeigt eine Zusammenfassung einzelner Verfahrensschritte zur Durchführung des erfindungsgemäßen Verfahrens.

In einem ersten Schritt S1 findet eine Initialisierung also eine Voreinstellung des Systems zur Durchführung des Verfahrens statt. Beispielsweise wird in dem ersten Schritt S1 ein benötigter Speicherplatz reserviert.

Im Anschluss daran, in einem zweiten Schritt S2, wird eine Prädiktion des Systemzustandes und erwarteter Messungen auf einen nächsten Zeitschritt durchgeführt.

In einem dritten Schritt S3 werden die Messverfahren, beispielsweise die Bildverarbeitung, parametrisiert, wobei in einem vierten Schritt S4 die Messung durchgeführt wird.

Anhand der im vierten Schritt S4 durchgeführten Messungen wird in einem fünften Schritt S5 eine Korrektur des Systemzustandes hinsichtlich der Fahrzeugeigenbewegung und der Parameter des Straßenhöhenprofils P durchgeführt, wobei eine Rückkopplung hinsichtlich der Parametrisierung der Messalgorithmen erfolgen kann.

In einem sechsten Schritt S6 werden das Straßenhöhenprofil P sowie zugehörige Unsicherheiten ausgekoppelt.

## Patentansprüche

1. Verfahren zur Ermittlung eines einem Fahrzeug vorausliegenden Straßenprofils einer Fahrspur anhand von erfassten Bilddaten (1) und/oder erfassten Fahrzeugeigenbewegungsdaten (2), wobei eine Schätzvorrichtung (3) vorgesehen ist, der die erfassten Bilddaten (1) und/oder die erfassten Fahrzeugeigenbewegungsdaten (2) zugeführt werden, **dadurch gekennzeichnet, dass** anhand der erfassten Bilddaten (1) und der erfassten Fahrzeugeigenbewegungsdaten (2) ein Straßenhöhenprofil (P) der dem Fahrzeug vorausliegenden Fahrspur ermittelt wird und anhand einer mittels der Schätzvorrichtung geschätzten Fahrzeugeigenbewegung das aus Messungen geschätzte Straßenhöhenprofil sukzessive zu einem durchgängigen, von der Fahrzeugeigenbewegung unabhängigen Straßenhöhenprofil zusammengesetzt wird, wobei das Straßenhöhenprofil (P) für eine jeweilige Radspur des Fahrzeuges ermittelt wird.

2. Verfahren nach Anspruch 1, **dadurch gekennzeichnet, dass** in Abhängigkeit des ermittelten Straßenhöhenprofils (P) der vorausliegenden Fahrspur zumindest eine Fahrwerksfunktion, Fahrwerksteuerung und/oder Fahrwerksregelung des Fahrzeuges gesteuert und/oder geregelt wird.

**3.** Verfahren nach Anspruch 1 oder 2,
**dadurch gekennzeichnet, dass** das Straßenhöhenprofil zeitlich derart integriert wird, dass vorhandene Bodenunebenheiten an den jeweiligen Radpositionen des Fahrzeuges bestimmbar sind, bevor diese vom Fahrzeug überfahren werden.

**4.** Vorrichtung zur Ermittlung eines einem Fahrzeug vorausliegenden Straßenprofils einer Fahrspur, wobei mittels wenigstens einer am Fahrzeug angeordneten Bildaufnahmeeinheit eine vorausliegende Fahrspur erfassbar ist und/oder mittels am Fahrzeug angeordneter Erfassungseinheiten eine Fahrzeugeigenbewegung erfassbar ist, wobei eine Schätzvorrichtung (3) vorgesehen ist, mittels der erfasste Bilddaten (1) und/oder Fahrzeugeigenbewegungsdaten (2) auswertbar sind, **dadurch gekennzeichnet, dass** anhand der Bilddaten (1) und/oder der Fahrzeugeigenbewegungsdaten (2) ein Straßenhöhenprofil (P) der dem Fahrzeug vorausliegenden Fahrspur und das Straßenhöhenprofil (P) für eine jeweilige Radspur ermittelbar ist, wobei das ermittelte Straßenhöhenprofil (P) einer Steuereinheit zuführbar ist, die in Abhängigkeit des Straßenhöhenprofils (P) wenigstens eine Fahrzeugfunktion (5) steuert und/oder regelt.

**5.** Vorrichtung nach Anspruch 4,
**dadurch gekennzeichnet, dass** die Schätzvorrichtung (3) eine Prediktor-Korrektor-Einheit, insbesondere ein Kalman-Filter, ist.

**6.** Vorrichtung nach Anspruch 4 oder 5,
**dadurch gekennzeichnet, dass** anhand der Schätzvorrichtung (3) eine Unsicherheit des Straßenhöhenprofils (P) und/oder von Fahrzeugeigenbewegungsdaten in Abhängigkeit von Ort und/oder Zeit ermittelbar ist.

**7.** Vorrichtung nach Anspruch 6,
**dadurch gekennzeichnet, dass** anhand der mittels der Schätzvorrichtung (3) bestimmten Unsicherheit des Straßenhöhenprofils und/oder Fahrzeugeigenbewegungsdaten Messalgorithmen parametrisierbar sind.

**Claims**

**1.** Method for determining a road profile of a lane in front of a vehicle, using collected image data (1) and/or collected intrinsic motion data (2) of the vehicle, an estimating device (3) being provided to which the collected image data (1) and/or the collected intrinsic motion data (2) of the vehicle are fed,
**characterised in that**, using the collected image data (1) and the collected intrinsic motion data (2) of the vehicle, a road elevation profile (P) of the lane in front of the vehicle is determined and, using an intrinsic motion of the vehicle estimated by means of the estimating device, the road elevation profile estimated from measurements is successively built up into a continuous road elevation profile independent of the intrinsic motion of the vehicle, the road elevation profile (P) being determined for a respective wheel track of the vehicle.

**2.** Method according to claim 1,
**characterised in that** at least one chassis function, open- and/or closed-loop chassis control of the vehicle is controlled in an open and/or closed loop as a function of the determined road elevation profile (P) of the lane in front.

**3.** Method according to claim 1 or 2,
**characterised in that** the road elevation profile is time-integrated in such a way that existing ground irregularities can be determined at the respective wheel positions of the vehicle before the vehicle passes over them.

**4.** Device for determining a road profile of a lane in front of a vehicle,
wherein a lane in front can be recorded by means of at least one image recording device mounted on the vehicle and/or an intrinsic motion of the vehicle can be recorded by means of detection units mounted on the vehicle, an estimating device (3) being provided by means of which recorded image data (1) and/or intrinsic motion data (2) of the vehicle can be evaluated,
**characterised in that**, using the image data (1) and/or the intrinsic motion data (2) of the vehicle, a road elevation profile (P) of the lane in front of the vehicle and the road elevation profile (P) for a respective lane can be determined, wherein the determined road elevation profile (P) can be fed to a control unit which controls in an open and/or closed loop at least one vehicle function (5).

**5.** Method according to claim 4,
**characterised in that** the estimating device (3) is a predictor/corrector unit, in particular a Kalman filter.

**6.** Method according to claim 4 or 5,
**characterised in that**, using the estimating device (3), an uncertainty of the road elevation profile (P) and/or of intrinsic motion data of the vehicle can be determined as a function of location and/or time.

**7.** Method according to claim 6,
**characterised in that**, using the uncertainty of the road elevation profile and/or of intrinsic motion data of the vehicle determined by means of the estimating device (3), measuring algorithms can be parameterised.

**Revendications**

**1.** Procédé de détermination d'un profil d'une voie précédant un véhicule sur une route au moyen de données image (1) détectées et / ou de données de mouvement propre du véhicule (2) détectées, un dispositif d'estimation (3), auquel sont envoyées les données image (1), étant prévu, **caractérisé en ce qu'**au moyen des données d'image (1) détectées et des données de mouvement propre du véhicule (2) un profil topographique (P) de la voie précédant le véhicule est déterminé, et au moyen d'un mouvement propre du véhicule estimé par le dispositif d'estimation le profil topographique, indépendamment du mouvement propre du véhicule, estimé à partir de mesures est composé successivement à un profil topographique de voie constant, le profil topographique de voie (P) étant déterminé pour un alignement des roues du véhicule.

**2.** Procédé selon la revendication 1, **caractérisé en ce qu'**en fonction du profil topographique de la voie (P) déterminé de la voie précédente au moins une fonction de châssis, une commande de châssis et / ou un réglage du châssis du véhicule est commandé et / ou réglé(e).

**3.** Procédé selon la revendication 1 ou 2, **caractérisé en ce que** le profil topographique de la voie est intégré en fonction du temps de telle sorte que des aspérités du sol existantes peuvent être déterminées sur chaque position de roue du véhicule avant que le véhicule ne roule sur celles-ci.

**4.** Dispositif servant à déterminer un profil de la précédant un véhicule, au moyen d'au moins une unité de prise de vues disposée sur le véhicule, une voie précédant pouvant être détectée et/ou au moyen d'unités de détection disposées sur le véhicule un mouvement propre du véhicule pouvant être détecté, un dispositif d'estimation (3) étant prévu, au moyen duquel des données d'image (1) et/ou des données de mouvement propre de véhicule (2) pouvant être exploitées, **caractérisé en ce qu'**au moyen des données d'image (1) et/ou des données de mouvement propre du véhicule (2) un profil topographique de la voie (P) précédant le véhicule sur la route et le profil topographique (P) pour un alignement de roue peuvent être déterminés, le profil topographique de la voie déterminé (P) pouvant être acheminé à une unité de commande, qui en fonction du profil topographique de la voie (P) commande et/ou règle au moins une fonction de châssis (5).

**5.** Dispositif selon la revendication 4, **caractérisé en ce que** le dispositif d'estimation (3) est une unité de correction /de prévision, en particulier un filtre de Kaiman.

**6.** Dispositif selon la revendication 4 ou la revendication 5, **caractérisé en ce qu'**au moyen du dispositif d'estimation (3) et/ou au moyen de données de mouvement propre du véhicule une incertitude du profil topographique de la voie (P) peut être déterminée en fonction du lieu et/ou du temps.

**7.** Dispositif selon la revendication 6, **caractérisé en ce qu'**au moyen de l'incertitude déterminée par le dispositif d'estimation (3) du profil topographique de la voie et/ou des données de mouvement propre de véhicule, des algorithmes de mesure peuvent être paramétrés.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19749086 C1
- US 20020087253 A1
- EP 1193661 A1
- US 6963657 B1
- DE 10127034 A1
- US 2002087253 A1